# FASCICULE DE BREVET EUROPEEN

(11) **EP 1 350 357 B1**
(45) Date de publication et mention de la délivrance du brevet: **08.09.2004**
(21) Numéro de dépôt: 01271713.8
(22) Date de dépôt: 20.11.2001
(51) Int. Cl.: H04L 9/30

(54) **PROCEDE D'AMELIORATION DE LA SECURITE DE SCHEMAS DE CHIFFREMENT A CLEF PUBLIQUE**
VERFAHREN ZUR STEIGERUNG DER SICHERHEIT EINES VERSCHLUSSELUNGSVERFAHRENS MIT OFFENTLICHEN SCHLUSSEL
METHOD FOR ENHANCING SECURITY OF PUBLIC KEY ENCRYPTION SCHEMAS

(30) Priorité: 18.12.2000 FR 0016573
(43) Date de publication de la demande: 08.10.2003
(73) Titulaire: GEMPLUS, 13420 Gémenos (FR)
(72) Inventeur: CORON, Jean-Sébastien, F-75015 Paris (FR); JOYE, Marc, F-83640 Saint Zacharie (FR); PAILLIER, Pascal, F-75020 Paris (FR)
(86) Numéro de dépôt international: PCT/FR2001/003645
(87) Numéro de publication internationale: WO 2002/051065

(56) Documents cités:
- YULIANG ZHENG: "Improved Public Key Cryptosystems Secure Against Chosen Ciphertext Attacks" UNIVERSITY OF WOLLONGONG, [en ligne] 3 février 1994 (1994-02-03), pages 1-16, XP002178900 Wollongong, Australia Extrait de l'Internet: <URL:http://citeseer.nj.nec.com/cs> [extrait le 2001-09-28]
- SHOUP, VICTOR: "Why Chosen Ciphertext Security Matters" IBM RESEARCH DIVISION, [en ligne] 23 novembre 1998 (1998-11-23), pages 1-25, XP002178901 Zurich Research Laboratory Extrait de l'Internet: <URL:http://citeseer.nj.nec.com/cs> [extrait le 2001-09-28]
- SHOUP, VICTOR: "A Proposal for an ISO Standard for Public Key Encryption" IBM RESEARCH DIVISION, [en ligne] 13 février 2001 (2001-02-13), pages 1-51, XP002178902 Zurich Research Laboratory Extrait de l'Internet: <URL:http://citeseer.nj.nec.com/cs> [extrait le 2001-09-28]

## Description

La présente invention concerne un procédé d'augmentation de la sécurité d'algorithmes de chiffrement à clef publique. Un schéma de chiffrement comprend un algorithme de chiffrement et un algorithme de déchiffrement présentant chacun un procédé de chiffrement et un de déchiffrement particulier.

Dans le modèle classique de la cryptographie à clef secrète, deux personnes désirant communiquer par l'intermédiaire d'un canal non sécurisé doivent au préalable se mettre d'accord sur une clé secrète de chiffrement K. La fonction de chiffrement et la fonction de déchiffrement utilisent la même clef K. L'inconvénient du système de chiffrement à clé secrète est que ledit système requiert la communication préalable de la clé K entre les deux personnes par l'intermédiaire d'un canal sécurisé, avant qu'un quelconque message chiffré ne soit envoyé à travers le canal non sécurisé. Dans la pratique, il est généralement difficile de trouver un canal de communication parfaitement sécurisé, surtout si la distance séparant les deux personnes est importante. On entend par canal sécurisé un canal pour lequel il est impossible de connaître ou de modifier les informations qui transitent par ledit canal. Un tel canal sécurisé peut être réalisé par un câble reliant deux terminaux, possédés par les deux dites personnes.

Le concept de cryptographie à clef publique fut inventé par Whitfield DIFFIE et Martin HELLMAN en 1976. La cryptographie à clef publique permet de résoudre le problème de la distribution des clefs à travers un canal non sécurisé. Le principe de la cryptographie à clef publique consiste à utiliser une paire de clefs, une clef publique de chiffrement et une clef privée de déchiffrement. Il doit être calculatoirement infaisable de trouver la clef privée de déchiffrement à partir de la clef publique de chiffrement. Une personne A désirant communiquer une information à une personne B utilise la clef publique de chiffrement de la personne B. Seule la personne B possède la clef privée associée à sa clef publique. Seule la personne B est donc capable de déchiffrer le message qui lui est adressé.

Un autre avantage de la cryptographie à clé publique sur la cryptographie à clé secrète est que la cryptographie à clef publique permet l'authentification par l'utilisation de signature électronique.

La première réalisation de schéma de chiffrement à clef publique fut mis au point en 1977 par Rivest, Shamir et Adleman, qui ont inventé le système de chiffrement RSA. La sécurité de RSA repose sur la difficulté de factoriser un grand nombre qui est le produit de deux nombres premiers. Depuis, de nombreux systèmes de chiffrement à clef publique ont été proposés, dont la sécurité repose sur différents problèmes calculatoires : (cette liste n'est pas exhaustive).
- Sac à dos de Merckle-Hellman :
   Ce système de chiffrement est basé sur la difficulté du problème de la somme de sous-ensembles.
- McEliece :
   Ce système de chiffrement est basé sur la théorie des codes algébriques. Il est basé sur le problème du décodage de codes linéaires.
- ElGamal :
   Ce système de chiffrement est basé sur la difficulté du logarithme discret dans un corps fini.
- Courbes elliptiques :
   Le système de chiffrement à courbe elliptique constitue une modification de systèmes cryptographiques existant pour les appliquer au domaine des courbes elliptiques.
   L'avantage des systèmes de chiffrement à courbes elliptiques est qu'ils nécessitent une taille de clef plus petite que pour les autres systèmes de chiffrement.

Dans ce qui suit, il est entendu que tous les éléments nécessaires au schéma de chiffrement de l'invention comme par exemple le message M, le chiffré C et toutes les abréviations de lettres ou lettres et chiffres qui suivent dans la description ci-dessous, sont des nombres entiers équivalents à des chaînes de bits. Par exemple, le symbole a||b dénote la concaténation des représentations binaires des entiers a et b, qui sont de fait les chaînes de bits respectives de a et de b.

Un algorithme de chiffrement déterministe prend en entrée le message M à chiffrer et renvoie en sortie le message chiffré C.

Par ailleurs, un algorithme de chiffrement probabiliste prend usuellement en entrée le message M à chiffrer et un aléa u, et renvoie en sortie un message chiffré C, en utilisant la clef publique du destinataire. L'algorithme de déchiffrement prend en entrée le chiffré C et renvoie en sortie le message M, à l'aide de la clef privée. Un exemple d'algorithme de chiffrement probabiliste à clef publique est l'algorithme de chiffrement El-Gamal.

Toutefois, la plupart des algorithmes de chiffrement probabilistes à clef publique ne présentent pas en eux-mêmes un niveau de sécurité suffisant. En effet, il existe de nombreuses situations pratiques dans lesquelles un attaquant peut avoir accès à une machine informatique réalisant l'algorithme de déchiffrement à l'aide de la clef privée. Si l'attaquant possède un message chiffré C, il peut ainsi demander à la machine de déchiffrement de déchiffrer certains messages chiffrés C' bien choisis, différent du message chiffré C, et obtenir ainsi des informations sur le message M correspondant au message chiffré C.

Le procédé de l'invention consiste en un procédé permettant d'augmenter le niveau de sécurité de tout algorithme de chiffrement probabiliste ou déterministe à clef publique. A partir d'un algorithme de chiffrement à clef publique pour lequel un attaquant ne peut pas obtenir le message clair à partir du message chiffré C, on construit un algorithme de chiffrement à clef publique pour lequel un attaquant ne peut pas obtenir d'information sur le message clair à partir du message chiffré C, même si l'attaquant a accès à une machine lui permettant de déchiffrer tout message chiffré C' différent de C. La construction utilise de plus un algorithme de chiffrement à clef secrète, tel que l'on ne peut pas obtenir d'information sur le message M à partir du message chiffré correspondant C. On obtient ainsi une construction hybride, mettant en oeuvre simultanément un algorithme de chiffrement à clef publique et un algorithme de chiffrement à clef secrète, pour obtenir un schéma de chiffrement hybride présentant un niveau de sécurité maximal.

Le procédé de l'invention utilise donc un schéma de chiffrement probabiliste ou déterministe à clef publique ***EP*** prenant en entrée un message ***mp*** et un aléa ***u*** et renvoyant en sortie un chiffré ***cp***. Le procédé utilise également un algorithme de chiffrement à clef secrète ***ES*** prenant en entrée un message ***ms*** et renvoyant en sortie un chiffré ***cs***, en utilisant une clef ***k***. L'algorithme de chiffrement probabiliste ou déterministe à clef publique utilise la clef ***pk*** pour chiffrer un message. Le déchiffrement se réalise en utilisant la clef privée ***sk*** correspondante.

Le procédé de l'invention comprend deux procédés distincts comprenant chacun deux parties :
- le premier procédé utilise un algorithme de chiffrement probabiliste et comprend deux parties : la première partie prenant en entrée le message ***M*** à chiffrer et la clef publique ***pk*** et renvoyant en sortie le message chiffré ***C*** ; la deuxième partie est l'algorithme de déchiffrement correspondant prenant en entrée un message chiffré ***C*** et la clef privée ***sk*** et renvoyant en sortie le message clair ***M*** ;
- le second procédé utilise un algorithme de chiffrement déterministe et comprend deux parties : la première partie prenant en entrée le message ***M*** à chiffrer et la clef publique ***pk*** et renvoyant en sortie le message chiffré ***C*** ; la deuxième partie est l'algorithme de déchiffrement correspondant prenant en entrée un message chiffré ***C*** et la clef privée ***sk*** et renvoyant en sortie le message clair ***M***.

La première partie et la seconde partie de chacun des procédés de l'invention utilisent également une fonction de hachage ***F*** prenant en entrée un aléa ***r*** et le message ***M***, une fonction de hachage ***G*** et une fonction de hachage ***H***.

La première partie du premier procédé de l'invention comprend les étapes suivantes :
a) Générer aléatoirement un aléa ***r*** ;
b) Appliquer la fonction de hachage ***F*** au message ***M*** et à l'aléa ***r*** pour obtenir ***s*** ;
c) Appliquer la fonction de hachage ***H*** à ***s*** et effectuer un ou-exclusif du résultat avec ***r*** pour obtenir ***t*** ;
d) Définir le message intermédiaire ***w=s***||***t***, où || dénote la concaténation de deux chaînes de bits ;
e) Appliquer l'algorithme de chiffrement ***EP*** au message intermédiaire ***w*** et à un aléa ***u*** pour obtenir ***c1***, à l'aide de la clef publique ***pk*** ;
f) Appliquer la fonction de hachage ***G*** à ***w*** et ***c1*** pour obtenir ***k*** ;
g) Appliquer l'algorithme de chiffrement ***ES*** au message ***M*** en utilisant la clef ***k*** pour obtenir le chiffré ***c2*** ;
h) Le message chiffré ***C*** est ***C=c1***||***c2***.

La seconde partie du premier procédé de l'invention comprend les étapes suivantes :
a) Séparer le message chiffré ***C*** en ***c1*** et ***c2*** ;
b) Appliquer à ***c1*** un algorithme de déchiffrement ***EP***^{***-1***} correspondant à l'algorithme de chiffrement ***EP***, en utilisant une clef privée ***sk*** pour obtenir le message intermédiaire ***w=s***||***t*** ;
c) Appliquer la fonction de hachage ***G*** à ***w*** et ***c1*** pour obtenir ***k*** ;
d) Appliquer l'algorithme de déchiffrement ***ES***^{***-1***} correspondant à l'algorithme de chiffrement ***ES*** au message chiffré ***c2*** à l'aide de la clef ***k*** pour obtenir le message ***M*** ;
e) Appliquer la fonction de hachage ***H*** à ***s*** et effectuer un ou-exclusif avec t pour obtenir ***r*** ;
f) Appliquer la fonction de hachage ***F*** au message ***M*** et à l'aléa ***r*** pour obtenir ***s'*** ;
g) Vérifier que ***s'=s*** ;
   - Si ***s'*** et ***s*** diffèrent, rejeter le message chiffré ***C*** ;
   - Sinon, aller à l'étape h ;
h) Renvoyer le message clair ***M***.

La première partie du second procédé de l'invention comprend les étapes suivantes :
a) Générer aléatoirement un aléa ***r*** ;
b) Appliquer la fonction de hachage ***F*** au message ***M*** et à l'aléa ***r*** pour obtenir ***s*** ;
c) Appliquer la fonction de hachage ***H*** à ***s*** et effectuer un ou-exclusif du résultat avec ***r*** pour obtenir ***t*** ;
d) Définir le message intermédiaire ***w=s***||***t***, où || dénote la concaténation de deux chaînes de bits ;
e) Appliquer l'algorithme de chiffrement ***EP*** au message intermédiaire ***w*** pour obtenir ***c1***, à l'aide de la clef publique ***pk*** ;
f) Appliquer la fonction de hachage ***G*** à ***w*** et ***c1*** pour obtenir ***k*** ;
g) Appliquer l'algorithme de chiffrement ***ES*** au message ***M*** en utilisant la clef ***k*** pour obtenir le chiffré ***c2*** ;
h) Le message chiffré ***C*** est ***C=c1***||***c2.***

La seconde partie du second procédé de l'invention comprend les étapes suivantes :
a) Séparer le message chiffré ***C*** en ***c1*** et ***c2*** ;
b) Appliquer à ***c1*** un algorithme de déchiffrement ***EP***^{***-1***} correspondant à l'algorithme de chiffrement ***EP***, en utilisant une clef privée ***sk*** pour obtenir le message intermédiaire ***w=s***||***t*** ;
c) Appliquer la fonction de hachage ***G*** à ***w*** et ***c1*** pour obtenir ***k*** ;
d) Appliquer l'algorithme de déchiffrement ***ES***^{***-1***} correspondant à l'algorithme de chiffrement ***ES*** au message chiffré ***c2*** à l'aide de la clef k pour obtenir le message ***M*** ;
e) Appliquer la fonction de hachage ***H*** à ***s*** et effectuer un ou-exclusif avec ***t*** pour obtenir ***r*** ;
f) Appliquer la fonction de hachage ***F*** au message ***M*** et à l'aléa ***r*** pour obtenir ***s'*** ;
g) Vérifier que ***s'=s*** ;
   - Si ***s'*** et ***s*** diffèrent, rejeter le message chiffré ***C*** ;
   - Sinon, aller à l'étape h ;
h) Renvoyer le message clair ***M***.

Préférentiellement, les étapes d de la première partie des deux procédés sont remplacées par le calcul ***w=i***||***s***||***t*** ou ***w=s***||***i***||***t*** ou ***w=s***||***t***||***i***, où ***i*** est une valeur quelconque pouvant contenir des informations utiles comme par exemple la taille binaire du message ***M*** ou l'identité de l'entité ayant chiffré ***M*** et émis le message chiffré ***C***. Egalement, l'algorithme de chiffrement à clef secrète ***ES*** est remplacé dans les étapes g par une opération de ou-exclusif entre le message ***M*** à chiffrer et la clef ***k***, pour obtenir le chiffré ***c2***.

De manière également préférentielle, les étapes b des secondes parties de deux procédés sont remplacées par les opérations : ***w*=*i***||***s***||***t*** ou ***w=s***||***i***||***t*** ou ***w=s***||***t***||***i***, et permettent d'en déduire la valeur ***i*** à toute fin de calcul ou de vérification. Egalement, l'algorithme de déchiffrement à clef secrète ***ES***^{***-1***} est remplacé dans les étapes d par une opération de ou-exclusif entre le message ***c2*** à chiffrer et la clef ***k***, pour obtenir le chiffré ***M***.

L'algorithme de chiffrement à clef publique construit est donc un algorithme de chiffrement hybride utilisant à la fois un algorithme de chiffrement à clef publique et un algorithme de chiffrement à clef secrète, ce qui permet d'obtenir de meilleures performances en temps de chiffrement. L'algorithme de chiffrement à clef publique ainsi construit présente un niveau de sécurité optimal : un attaquant ne peut pas obtenir d'information sur le message clair ***M*** correspondant au message chiffré ***C***, même s'il a accès à une machine de déchiffrement lui permettant de déchiffrer tout message ***C'*** distinct de ***C***.

Les procédés décrits ci-dessus de l'invention sont destinés à des objets portables électroniques du type carte à puce.

## Revendications

1. Procédé de chiffrement à clef publique prenant en entrée un message ***M*** à chiffrer et la clef publique ***pk*** et renvoyant en sortie le message chiffré ***C***, ledit procédé utilisant un algorithme de chiffrement probabiliste à clef publique ***EP*** prenant en entrée un message ***mp*** et un aléa ***u*** et renvoyant en sortie un chiffré ***cp***, ledit procédé utilisant également un algorithme de chiffrement à clef secrète ***ES*** prenant en entrée un message ***ms*** et renvoyant en sortie un chiffré ***cs***, ledit procédé de chiffrement probabiliste à clef publique utilisant la clef ***pk*** pour chiffrer un message, utilisant également une fonction de hachage ***F*** prenant en entrée un aléa ***r*** et le message ***M***, une fonction de hachage ***G*** et une fonction de hachage ***H***, **caractérisé en ce qu'**il comprend les huit étapes suivantes :
a) Générer aléatoirement un aléa ***r*** ;
b) Appliquer la fonction de hachage ***F*** au message ***M*** et à l'aléa ***r*** pour obtenir ***s*** ;
c) Appliquer la fonction de hachage ***H*** à ***s*** et effectuer un ou-exclusif du résultat avec ***r*** pour obtenir ***t*** ;
d) Définir le message intermédiaire ***w=s***||***t***, où || dénote la concaténation de deux chaînes de bits ;
e) Appliquer l'algorithme de chiffrement ***EP*** au message intermédiaire ***w*** et à un aléa ***u*** pour obtenir ***c1***, à l'aide de la clef publique ***pk*** ;
f) Appliquer la fonction de hachage ***G*** à ***w*** et ***c1*** pour obtenir ***k*** ;
g) Appliquer l'algorithme de chiffrement ***ES*** au message ***M*** en utilisant la clef ***k*** pour obtenir le chiffré ***c2*** ;
h) Le message chiffré ***C*** est ***C=c1***||***c2***.

2. Procédé de déchiffrement à clef publique correspondant au procédé de chiffrement à clef publique selon la revendication 1, ledit procédé prenant en entrée un message chiffré ***C*** et la clef privée ***sk, sk*** correspondant à la clé publique ***pk*** de l'algorithme de chiffrement probabiliste ***EP,*** et renvoyant en sortie le message clair ***M***, ledit procédé étant **caractérisé en ce qu'**il comprend les étapes suivantes :
i) Séparer le message chiffré ***C*** en ***c1*** et ***c2*** ;
j) Appliquer à ***c1*** un algorithme de déchiffrement ***EP***^{***-1***} correspondant à l'algorithme de chiffrement ***EP***, en utilisant une clef privée ***sk*** pour obtenir le message intermédiaire ***w=s***||***t*** ;
k) Appliquer la fonction de hachage ***G*** à ***w*** et ***c1*** pour obtenir ***k*** ;
l) Appliquer l'algorithme de déchiffrement ***ES***^{***-1***} correspondant à l'algorithme de chiffrement ***ES*** au message chiffré ***c2*** à l'aide de la clef ***k*** pour obtenir le message ***M*** ;
m) Appliquer la fonction de hachage ***H*** à ***s*** et effectuer un ou-exclusif avec ***t*** pour obtenir ***r*** ;
n) Appliquer la fonction de hachage ***F*** au message ***M*** et à l'aléa ***r*** pour obtenir ***s'*** ;
o) Vérifier que ***s'=s*** ;
- Si ***s'*** et ***s*** diffèrent, rejeter le message chiffré ***C*** ;
- Sinon, aller à l'étape ***p*** ;
p) Renvoyer le message clair ***M***.

3. Procédé de chiffrement à clef publique prenant en entrée un message ***M*** à chiffrer et la clef publique ***pk*** et renvoyant en sortie le message chiffré ***C***, ledit procédé utilisant un algorithme de chiffrement déterministe à clef publique ***EP*** prenant en entrée un message ***mp*** et renvoyant en sortie un chiffré ***cp***, ledit procédé utilisant également un algorithme de chiffrement à clef secrète ***ES*** prenant en entrée un message ***ms*** et renvoyant en sortie un chiffré ***cs*,** ledit procédé de chiffrement déterministe à clef publique utilisant la clef ***pk*** pour chiffrer un message, utilisant également une fonction de hachage ***F*** prenant en entrée un aléa ***r*** et le message ***M*** , une fonction de hachage ***G*** et une fonction de hachage ***H*** , **caractérisé en ce qu'**il comprend les 9 étapes suivantes :
i) Générer aléatoirement un aléa ***r*** ;
j) Appliquer la fonction de hachage ***F*** au message ***M*** et à l'aléa ***r*** pour obtenir ***s*** ;
k) Appliquer la fonction de hachage ***H*** à ***s*** et effectuer un ou-exclusif du résultat avec ***r*** pour obtenir ***t*** ;
l) Définir le message intermédiaire ***w*=*s***||***t***, où || dénote la concaténation de deux chaînes de bits ;
m) Appliquer l'algorithme de chiffrement ***EP*** au message intermédiaire ***w*** pour obtenir ***c1***, à l'aide de la clef publique ***pk*** ;
n) Appliquer la fonction de hachage ***G*** à ***w*** et ***c1*** pour obtenir ***k*** ;
o) Appliquer l'algorithme de chiffrement ***ES*** au message ***M*** en utilisant la clef ***k*** pour obtenir le chiffré ***c2*** ;
p) Le message chiffré ***C*** est ***C=c1***||***c2***.

4. Procédé de déchiffrement à clef publique correspondant au procédé de chiffrement à clef publique selon la revendication 3, ledit procédé prenant en entrée un message chiffré ***C*** et la clef privée ***sk, sk*** correspondant à la clé publique ***pk*** de l'algorithme de chiffrement déterministe ***EP***, et renvoyant en sortie le message clair ***M***, ledit procédé étant **caractérisé en ce qu'**il comprend les étapes suivantes :
i) Séparer le message chiffré ***C*** en ***c1*** et ***c2*** ;
j) Appliquer à ***c1*** un algorithme de déchiffrement ***EP***^{***-1***} correspondant à l'algorithme de chiffrement ***EP***, en utilisant une clef privée ***sk*** pour obtenir le message intermédiaire ***w=s***||***t*** ;
k) Appliquer la fonction de hachage ***G*** à ***w*** et ***c1*** pour obtenir ***k*** ;
l) Appliquer l'algorithme de déchiffrement ***ES***^{***-1***} correspondant à l'algorithme de chiffrement ***ES*** au message chiffré ***c2*** à l'aide de la clef ***k*** pour obtenir le message ***M*** ;
m) Appliquer la fonction de hachage ***H*** à ***s*** et effectuer un ou-exclusif avec ***t*** pour obtenir ***r*** ;
n) Appliquer la fonction de hachage ***F*** au message ***M*** et à l'aléa r pour obtenir ***s'*** ;
o) Vérifier que ***s'=s*** ;
- Si ***s'*** et ***s*** diffèrent, rejeter le message chiffré ***C*** ;
- Sinon, aller à l'étape ***p*** ;
p) Renvoyer le message clair ***M***.

5. Procédé selon les revendications 1 et 3, **caractérisé en ce que** les étapes d sont remplacées par le calcul ***w=i*||*s*||*t*** ou ***w=s*||*i*||*t*** ou ***w=s*||*t*||*i***, où ***i*** est une valeur quelconque pouvant contenir des informations utiles comme par exemple la taille binaire du message ***M*** ou l'identité de l'entité ayant chiffré ***M*** et émis le message chiffré ***C*** .

6. Procédé selon les revendications 2 et 4, **caractérisé en ce que** les étapes b permettent d'obtenir ***w=i***||***s***||***t*** ou ***w=s***||***i***||***t*** ou ***w=s***||***t***||***i***, et d'en déduire la valeur ***i*** à toute fin de calcul ou de vérification.

7. Procédé selon les revendications 1 et 3, **caractérisé en ce que** l'algorithme de chiffrement à clef secrète ES est remplacé dans les étapes g de la revendication 1 et g de la revendication 3 par une opération de ou-exclusif entre le message ***M*** à chiffrer et la clef ***k***, pour obtenir le chiffré ***c2.***

8. Procédé selon les revendications 2 et 4, **caractérisé en ce que** l'algorithme de déchiffrement à clef secrète ***ES***^{***-1***} est remplacé dans les étapes d de la revendication 2 et d de la revendication 4 par une opération de ou-exclusif entre le message ***c2*** à chiffrer et la clef ***k****,* pour obtenir le chiffré ***M***.

9. Procédé suivant l'une quelconque des revendications précédentes, **caractérisé en ce que** le procédé est utilisé dans un objet électronique portable de type carte à puce.

## Patentansprüche

1. Verschlüsselungsverfahren mit öffentlichem Schlüssel, das am Eingang eine zu verschlüsselnde Nachricht ***M*** und den öffentlichen Schlüssel ***pk*** nimmt und am Ausgang die verschlüsselte Nachricht ***C*** zurücksendet, wobei das besagte Verfahren einen wahrscheinlichen Verschlüsselungsalgorithmus mit öffentlichem Schlüssel ***EP*** verwendet, der am Eingang eine Nachricht ***mp*** und einen Zufall ***u*** nimmt und am Ausgang eine Verschlüsselung ***cp*** zurücksendet, wobei das besagte Verfahren ebenfalls einen Verschlüsselungsalgorithmus mit Geheimschlüssel ***ES*** verwendet, der am Eingang eine Nachricht ***ms*** nimmt und am Ausgang eine Verschlüsselung ***cs*** zurücksendet, wobei das besagte wahrscheinliche Verschlüsselungsverfahren mit öffentlichem Schlüssel den Schlüssel ***pk*** benutzt, um eine Nachricht zu verschlüsseln, sowie eine Hackfunktion ***F*** , die am Eingang einen Zufall ***r*** und die Nachricht ***M*** nimmt, eine Hackfunktion ***G*** und eine Hackfunktion ***H*** , **dadurch gekennzeichnet, dass** es die acht folgenden Schritte umfasst:
a) Zufällige Erzeugung eines Zufalls ***r*** ;
b) Anwendung der Hackfunktion ***F*** auf die Nachricht ***M*** und auf den Zufall ***r*** , um ***s*** zu erhalten;
c) Anwendung der Hackfunktion ***H*** auf ***s*** und Durchführung eines exklusiven ODERS des Ergebnisses mit ***r*** , um ***t*** zu erhalten;
d) Definition der Zwischennachricht ***w=s*//*t,*** wobei // die Verkettung zweier Bitketten bedeutet;
e) Anwendung des Verschlüsselungsalgorithmus ***EP*** auf die Zwischennachricht ***w*** und einen Zufall ***u***, um ***c1*** zu erhalten, mit Hilfe des öffentlichen Schlüssels ***pk***;
f) Anwendung der Hackfunktion ***G*** auf ***w*** und ***c1***, um ***k*** zu erhalten;
g) Anwendung des Verschlüsselungsalgorithmus ***ES*** auf die Nachricht ***M*** unter Verwendung des Schlüssels ***k***, um die Verschlüsselung ***c2*** zu erhalten;
h) Die verschlüsselte Nachricht ***C*** lautet ***C=c1*//*c2***.

2. Entschlüsselungsverfahren mit öffentlichem Schlüssel entsprechend dem Verschlüsselungsverfahren mit öffentlichem Schlüssel nach Anspruch 1, wobei das besagte Verfahren am Eingang eine verschlüsselte Nachricht ***C*** und den Privatschlüssel ***sk*** nimmt, wobei ***sk*** dem öffentlichen Schlüssel ***pk*** des wahrscheinlichen Verschlüsselungsalgorithmus ***EP*** entspricht, und am Ausgang die klare Nachricht ***M*** zurücksendet, wobei das besagte Verfahren **dadurch gekennzeichnet ist, dass** es die folgenden Schritte umfasst:
i) Trennen der verschlüsselten Nachricht ***C*** in ***c1*** und ***c2***;
j) Anwendung auf ***c1*** eines dem Verschlüsselungsalgorithmus ***EP*** entsprechenden Entschlüsselungsalgorithmus ***EP***^{***-1***} unter Verwendung eines Privatschlüssels ***sk***, um die Zwischennachricht ***w=s*//*t*** zu erhalten;
k) Anwendung der Hackfunktion ***G*** auf ***w*** und ***c1***, um ***k*** zu erhalten;
l) Anwendung des dem Verschlüsselungsalgorithmus ***ES*** entsprechenden Entschlüsselungsalgorithmus ***ES***^{***-1***} auf die verschlüsselte Nachricht ***c2*** mit Hilfe des Schlüssels ***k***, um die Nachricht ***M*** zu erhalten;
m) Anwendung der Hackfunktion ***H*** auf ***s*** und Durchführung eines exklusiven ODERS mit ***t*** , um ***r*** zu erhalten;
n) Anwendung der Hackfunktion ***F*** auf die Nachricht ***M*** und den Zufall ***r***, um ***s'*** zu erhalten;
o) Prüfen ob ***s'=s***,
- sind ***s'*** und ***s*** unterschiedlich, die verschlüsselte Nachricht ***C*** verwerfen;
- anderenfalls auf den Schritt p übergehen;
p) Rücksendung der klaren Nachricht ***M***.

3. Verschlüsselungsverfahren mit öffentlichem Schlüssel, das am Eingang eine zu verschlüsselnde Nachricht ***M*** und den öffentlichen Schlüssel ***pk*** nimmt und am Ausgang die verschlüsselte Nachricht ***C*** zurücksendet, wobei das besagte Verfahren einen bestimmenden Verschlüsselungsalgorithmus mit öffentlichem Schlüssel ***EP*** verwendet, der am Eingang eine Nachricht ***mp*** nimmt und am Ausgang eine Verschlüsselung ***cp*** zurücksendet, wobei das besagte Verfahren ebenfalls einen Verschlüsselungsalgorithmus mit Geheimschlüssel ***ES*** verwendet, der am Eingang eine Nachricht ***ms*** nimmt und am Ausgang eine Verschlüsselung ***cs*** zurücksendet, wobei das besagte bestimmende Verschlüsselungsverfahren mit öffentlichem Schlüssel den Schlüssel ***pk*** benutzt, um eine Nachricht zu verschlüsseln, sowie eine Hackfunktion ***F***, die am Eingang einen Zufall ***r*** und die Nachricht ***M*** nimmt, eine Hackfunktion ***G*** und eine Hackfunktion ***H***, **dadurch gekennzeichnet, dass** es die 8 folgenden Schritte umfasst:
a) Zufällige Erzeugung eines Zufalls ***r***;
b) Anwendung der Hackfunktion ***F*** auf die Nachricht ***M*** und auf den Zufall ***r***, um ***s*** zu erhalten;
c) Anwendung der Hackfunktion ***H*** auf ***s*** und Durchführung eines exklusiven ODERS des Ergebnisses mit ***r***, um ***t*** zu erhalten;
d) Definition der Zwischennachricht ***w=s*//*t,*** wobei // die Verkettung zweier Bitketten bedeutet;
e) Anwendung des Verschlüsselungsalgorithmus ***EP*** auf die Zwischennachricht ***w***, um ***c1*** zu erhalten, mit Hilfe des öffentlichen Schlüssels ***pk***;
f) Anwendung der Hackfunktion ***G*** auf ***w*** und ***c1***, um ***k*** zu erhalten;
g) Anwendung des Verschlüsselungsalgorithmus ***ES*** auf die Nachricht ***M*** unter Verwendung des Schlüssels ***k***, um die Verschlüsselung ***c2*** zu erhalten;
h) Die verschlüsselte Nachricht ***C*** lautet ***C=c1*//*c2***.

4. Entschlüsselungsverfahren mit öffentlichem Schlüssel entsprechend dem Verschlüsselungsverfahren mit öffentlichem Schlüssel nach Anspruch 3, wobei das besagte Verfahren am Eingang eine verschlüsselte Nachricht ***C*** und den Privatschlüssel ***sk*** nimmt, wobei ***sk*** dem öffentlichen Schlüssel ***pk*** des bestimmenden Verschlüsselungsalgorithmus ***EP*** entspricht, und am Ausgang die klare Nachricht M zurücksendet, wobei das besagte Verfahren **dadurch gekennzeichnet ist, dass** es die folgenden Schritte umfasst:
i) Trennen der verschlüsselten Nachricht ***C*** in ***c1*** und ***c2***;
j) Anwendung auf ***c1*** eines dem Verschlüsselungsalgorithmus ***EP*** entsprechenden Entschlüsselungsalgorithmus ***EP***^{***-1***} unter Verwendung eines Privatschlüssels ***sk***, um die Zwischennachricht ***w=s*//*t*** zu erhalten;
k) Anwendung der Hackfunktion ***G*** auf ***w*** und ***c1***, um ***k*** zu erhalten;
l) Anwendung des dem Verschlüsselungsalgorithmus ***ES*** entsprechenden Entschlüsselungsalgorithmus ***ES***^{***-1***} auf die verschlüsselte Nachricht ***c2*** mit Hilfe des Schlüssels ***k***, um die Nachricht ***M*** zu erhalten;
m) Anwendung der Hackfunktion ***H*** auf ***s*** und Durchführung eines exklusiven ODERS mit ***t***, um ***r*** zu erhalten;
n) Anwendung der Hackfunktion ***F*** auf die Nachricht ***M*** und den Zufall ***r***, um ***s'*** zu erhalten;
o) Prüfen ob ***s'=s***,
- sind ***s'*** und ***s*** unterschiedlich, die verschlüsselte Nachricht ***C*** verwerfen;
- anderenfalls auf den Schritt p übergehen;
p) Rücksendung der klaren Nachricht ***M*.**

5. Verfahren nach den Ansprüchen 1 und 3, **dadurch gekennzeichnet, dass** die Schritte d) durch die Rechnung ***w=i*//*s*//*t*** oder ***w=s*//*i*//*t*** oder ***w=s*//*t*//*i*** ersetzt werden, wobei ***i*** ein beliebiger Wert ist, der nützliche Informationen enthalten kann, wie beispielsweise die binäre Größe der Nachricht ***M*** oder die Identität der Einheit, die ***M*** verschlüsselt und die verschlüsselte Nachricht ***C*** gesendet hat.

6. Verfahren nach den Ansprüchen 2 und 4, **dadurch gekennzeichnet, dass** die Schritte b) ermöglichen, **w=i//s//t** oder ***w=s*//*i*//*t*** oder ***w=s*//*t*//*i*** zu erhalten und für Berechnungs- oder Prüfungszwecke, den Wert ***i*** davon abzuleiten.

7. Verfahren nach den Ansprüchen 1 und 3, **dadurch gekennzeichnet, dass** der Verschlüsselungsalgorithmus mit Geheimschlüssel ***ES*** in den Schritten g) des Anspruchs 1 und g) des Anspruchs 3 durch eine Operation exklusives ODER zwischen der zu verschlüsselnden Nachricht ***M*** und dem Schlüssel ***k*** ersetzt wird, um die Verschlüsselung ***c2*** zu erhalten.

8. Verfahren nach den Ansprüchen 2 und 4, **dadurch gekennzeichnet, dass** der Entschlüsselungsalgorithmus mit Geheimschlüssel ***ES***^{***-1***} in den Schritten d) des Anspruchs 2 und d) des Anspruchs 4 durch eine Operation exklusives ODER zwischen der zu verschlüsselnden Nachricht ***c2*** und dem Schlüssel ***k*** ersetzt wird, um die Verschlüsselung ***M*** zu erhalten.

9. Verfahren nach einem der vorangehenden Ansprüche, **dadurch gekennzeichnet, dass** das Verfahren in einem tragbaren elektronischen Objekt des Typs Chipkarte verwendet wird.

## Claims

1. A public key enciphering method taking as an input a message ***M*** to be enciphered and the public key **pk** and returning as an output the enciphered message ***C***, the said method using a probabilistic public key enciphering algorithm ***EP*** taking as an input a message ***mp*** and a random variable ***u*** and returning as an output an enciphered message ***cp***, the said method also using a secret key enciphering algorithm ***ES*** taking as an input a message ***ms*** and returning as an output an enciphered message ***cs***, the said probabilistic public key enciphering method using the key ***pk*** to encipher a message, also using a hash function ***F*** taking as an input a random variable ***r*** and the message ***M***, a hash function ***G*** and a hash function ***H***, **characterised in that** it comprises the following eight steps:
a) Randomly generating a random variable ***r***;
b) Applying the hash function ***F*** to the message ***M*** and to the random variable ***r*** in order to obtain ***s***;
c) Applying the hash function ***H*** to ***s*** and effecting an exclusive OR on the result with ***r*** in order to obtain ***t***;
d) Defining the intermediate message ***w=s***||***t***, where || denotes the concatenation of two strings of bits;
e) Applying the enciphering algorithm EP to the intermediate message ***w*** and to a random variable ***u*** in order to obtain ***c1***, using the public key ***pk***;
f) Applying the hash function ***G*** to ***w*** and ***c1*** in order to obtain ***k***;
g) Applying the enciphering algorithm ***ES*** to the message ***M*** using the key ***k*** in order to obtain the enciphered message ***c2***;
h) The enciphered message ***C*** *is* ***C=c1***||***c2***.

2. A public key deciphering method corresponding to the public key enciphering method according to Claim 1, the said method taking as an input an enciphered message ***C*** and the private key ***sk, sk*** corresponding to the public key ***pk*** of the probabilistic enciphering algorithm ***EP***, and returning as an output the message in clear ***M***, the said method being **characterised in that** it comprises the following steps:
i) Separating the enciphered message ***C*** into ***c1*** and ***c2***;
j) Applying to ***c1*** a deciphering algorithm ***EP***^{***-1***} corresponding to the enciphering algorithm ***EP***, using a private key ***sk*** in order to obtain the intermediate message ***w=s***||***t***;
k) Applying the hash function ***G*** to ***w*** and ***c1*** in order to obtain ***k***;
l) Applying the deciphering algorithm ***ES***^{***-1***} corresponding to the enciphering algorithm ***ES*** to the enciphered message ***c2*** using the key ***k*** in order to obtain the message ***M***;
m) Applying the hash function ***H*** to ***s*** and effecting an exclusive OR with ***t*** in order to obtain ***r***;
n) Applying the hash function ***F*** to the message ***M*** and to the random variable ***r*** in order to obtain ***s'***;
o) Verifying that ***s'=s*;**
- If ***s'*** and ***s*** are different, rejecting the enciphered message ***C***;
- Otherwise going to step p;
p) Returning the message in clear ***M***.

3. A public key enciphering method taking as an input a message ***M*** to be enciphered and the public key ***pk*** and returning as an output the enciphered message ***C***, the said method using a deterministic public key enciphering algorithm ***EP*** taking as an input a message mp and returning as an output an enciphered message ***cp***, the said method also using a secret key enciphering algorithm ***ES*** taking as an input a message ***ms*** and returning as an output an enciphered message ***cs***, the said deterministic public key enciphering method using the key ***pk*** to encipher a message, also using a hash function ***F*** taking as an input a random variable ***r*** and the message ***M***, a hash function ***G*** and a hash function ***H***, **characterised in that** it comprises the following 9 steps:
i) Randomly generating a random variable ***r***;
j) Applying the hash function ***F*** to the message ***M*** and to the random variable ***r*** in order to obtain ***s***;
k) Applying the hash function ***H*** to ***s*** and effecting an exclusive OR on the result with ***r*** in order to obtain ***t***;
l) Defining the intermediate message ***w=s***||***t***, where || denotes the concatenation of two strings of bits;
m) Applying the enciphering algorithm ***EP*** to the intermediate message ***w*** in order to obtain ***c1***, using the public key ***pk***;
n) Applying the hash function ***G*** to ***w*** and ***c1*** in order to obtain ***k***;
o) Applying the enciphering algorithm ES to the message ***M*** using the key ***k*** in order to obtain the enciphered message ***c2***;
p) The enciphered message ***C*** is ***C=c1***||***c2***.

4. A public key deciphering method corresponding to the public key enciphering method according to Claim 3, the said method taking as an input an enciphered message ***C*** and the private key ***sk, sk*** corresponding to the public key ***pk*** of the deterministic enciphering algorithm ***EP***, and returning as an output the message in clear ***M***, the said method being **characterised in that** it comprises the following steps:
i) Separating the enciphered message ***C*** into ***c1*** and ***c2****;*
j) Applying to ***c1*** a deciphering algorithm ***EP***^{***-1***} corresponding to the enciphering algorithm ***EP***, using a private key ***sk*** in order to obtain the intermediate message ***w=s***||***t***;
k) Applying the hash function ***G*** to ***w*** and ***c1*** in order to obtain ***k***;
l) Applying the deciphering algorithm ***ES***^{***-1***} corresponding to the enciphering algorithm ***ES*** to the enciphered message ***c2*** using the key ***k*** in order to obtain the message ***M***;
m) Applying the hash function ***H*** to s and effecting an exclusive OR with ***t*** in order to obtain ***r***;
n) Applying the hash function ***F*** to the message ***M*** and to the random variable ***r*** in order to obtain ***s'***;
o) Verifying that ***s'=s***;
- If ***s'*** and ***s*** are different, rejecting the enciphered message ***C***;
- Otherwise going to step p;
p) Returning the message in clear ***M***.

5. A method according to Claims 1 and 3, **characterised in that** steps d are replaced by the calculation ***w=i***||***s***||***t*** or ***w=s***||***i***||***t*** or ***w=s***||***t***||***i***, where ***i*** is any value which may contain useful information such as for example the binary size of the message ***M*** or the identity of the entity which enciphered ***M*** and sent the enciphered message ***C***.

6. A method according to Claims 2 and 4, **characterised in that** steps b make it possible to obtain ***w*=*i***||***s***||***t*** or ***w*=*s***||***i***||***t*** or ***w*=*s***||***t***||***i***, and to derive therefrom the value ***i*** for any calculation or verification purpose.

7. A method according to Claims 1 and 3, **characterised in that** the secret key enciphering algorithm ***ES*** is replaced in steps g of Claim 1 and g of Claim 3 by an exclusive OR operation between the message ***M*** to be enciphered and the key ***k***, in order to obtain the enciphered message ***c2***.

8. A method according to Claims 2 and 4, **characterised in that** the secret key deciphering algorithm ***ES***^{***-1***} is replaced in steps d of Claim 2 and d of Claim 4 by an exclusive OR operation between the message ***c2*** to be enciphered and the key ***k*,** in order to obtain the enciphered message ***M***.

9. A method according to any one of the preceding claims, **characterised in that** the method is used in a portable electronic object of the chip card type.
